# EUROPEAN PATENT APPLICATION

(11) **EP 4 443 581 A1**
(43) Date of publication of application: **09.10.2024**
(21) Application number: 24166254.3
(22) Date of filing: 26.03.2024
(51) Int. Cl.: H01M 10/04, H01M 50/107, H01M 50/152, H01M 50/528, H01M 50/531, H01M 50/533, H01M 50/536, H01M 50/538, H01M 50/559, H01M 50/109, H01M 50/153, H01M 50/503, H01M 50/505, H01M 50/56

(54) **BATTERY**

(30) Priority: 26.03.2023 KR 20230039391; 04.05.2023 KR 20230058402
(71) Applicant: Samsung SDI Co., Ltd., Yongin-si, Gyeonggi-do 17084 (KR)
(72) Inventor: Park, Sanghun, 17084 Yongin-si, Gyeonggi-do (KR); Lim, Sungbin, 17084 Yongin-si, Gyeonggi-do (KR)
(74) Representative: Gulde & Partner

(57) **Abstract**

Provided is a battery. The battery includes a core cell including first and second surfaces opposite each other along a first axis, first and second electrode tabs respectively disposed on the first and second surfaces of the core cell, and first and second coupling parts respectively fixing the first and second electrode tabs on the first and second surfaces, respectively, wherein the first and second coupling parts are respectively formed along a concave arc shape toward the center position of the first and second surfaces. While forming a conductive connection to the electrode of the core cell and the electrode of the core cell, the position of the coupling part that intermediates the coupling between the electrode tabs forming the charge and discharge path of the core cell indicates the position as an appropriate position that is advantageous in the relatively flatness side surface and may improve weldability on the first and second surfaces where the first and second electrodes are formed. In addition, through the design of the shape of the coupling part designed in an arc shape extending to both sides centering on the curved position that may be exposed to external impact, by propagating an external impact along both sides of the curved position, the destruction of coupling parts may be prevented while preventing local stress concentration, and as a result, it is possible to increase the bonding strength between the core cell and the electrode tab. Thus, a battery may be provided, in which peeling off of an electrode tab lifted from a core cell due to an external impact may be prevented.

## Description

### BACKGROUND

The present disclosure relates to batteries.

In general, a secondary battery is a battery that may be charged and discharged, unlike a primary battery that cannot be charged. Secondary batteries are used as energy sources for mobile devices, electric vehicles, hybrid vehicles, electric bicycles, and uninterruptible power supplies. Depending on the type of an external device to which a battery is applied, secondary batteries are used in the form of a single battery or the form of a module in which multiple batteries are connected and bundled into a single unit.

### SUMMARY

One or more embodiments include a battery in which destruction of a coupling part is prevented, increase in a bonding strength between a core cell and an electrode tab is realized, and peeling off of an electrode tab exposed to an external impact may be lifted from the core cell may be prevented while forming a conductive connection with the electrode of the core cell and the electrode of the core cell through the design of the location and shape of the coupling part that mediates the coupling between the electrode tabs that form the charging and discharging path of the core cell.

Additional aspects will be set forth in part in the description which follows and, in part, will be apparent from the description, or may be learned by practice of the presented embodiments of the present disclosure.

According to one or more embodiments, a battery includes a core cell including first and second surfaces opposite each other along a first axis, first and second electrode tabs disposed on first and second surfaces of the core cell, and first and second coupling parts fixing the first and second electrode tabs on the first and second surfaces, wherein the first and second coupling parts are formed along a concave arc shape toward a center position of each of the first and second surfaces.

The battery may further include first and second electrodes, wherein the first and second coupling parts conductively couple the first and second electrodes formed on the first and second surfaces and the first and second electrode tabs to each other.

For example, the first and second coupling parts are formed at close-edge positions of the first and second surfaces that are inward from edge positions of the first and second surfaces and close to the edge positions of the first and second surfaces, respectively.

For example, first and second electrodes electrically connected to the first and second electrode tabs are formed on first and second surfaces of the battery, respectively.

The second electrode may be formed from a can extending to an edge position of a first surface to surround an opening of an open upper end while forming the entire second surface, the first electrode is formed from a cap assembly assembled to an opening of an open upper end of the can, a second electrode is formed at an edge position of the first surface, and the edge position of the second surface is formed with a relatively thicker thickness than the center position of the second surface.

For example, the first coupling part is formed at an inner position of an outer circumferential line forming an end of the cap assembly.

For example, the first and second coupling parts are formed at positions relatively adjacent to the edge positions of the first and second surfaces among the center positions of the first and second surfaces and the edge positions of the first and second surfaces.

For example, the edge position of the first and second surfaces corresponds to the outer circumference of the first and second surfaces that come into contact with the side surface connecting the first and second surfaces to each other.

For example, close-edge positions of the first and second surfaces where the first and second coupling parts are formed are projected to different positions along a first axis.

For example, the first coupling part is formed at a position relatively adjacent to the center position of the first surface, and the second coupling part is formed at a position relatively far from the center position of the second surface.

For example, the first and second coupling parts are formed at an inner position relatively adjacent to the axis and an outer position relatively far from the axis, respectively, according to a distance from an axis passing through the center position of the first and second surfaces.

For example, the first surface includes a first electrode formed over a region including a center position of the first surface and a second electrode formed at an edge position of the first surface, and the second surface includes a second electrode formed over the entire second surface.

For example, the first and second electrode tabs includes main bodies of the first and second electrode tabs formed on the first and second surfaces, respectively, and first and second connection pieces protruding from the main body of the first and second electrode tabs to an outer position of the first and second surfaces.

For example, along the protrusion direction in which the first and second connection pieces protrude, the main body of the first and second electrode tabs includes first and second portions formed on opposite sides of the first and second coupling parts, respectively, and a second portion opposite to the first and second connection pieces extends longer than the first portion from which the first and second connection pieces protrude.

For example, along the width direction intersecting the protruding direction of the first and second connection pieces, each of the first and second connection pieces is formed to have a smaller width than the main body of the first and second electrode tabs.

For example, the main body of the first electrode tab has a radial direction as a long axis, so that the maximum span along the radial direction from the center position of the first surface is greater than the maximum span along the rotational direction around the center position of the first surface, and the main body of the second electrode tab has a major axis in the rotation direction, so that the maximum span along the rotational direction centered on the circumference of the center position of the second surface is greater than the maximum span along the radial direction from the center position of the second surface.

For example, the center position of the first surface corresponds to the position of a center pin forming a winding center of an electrode assembly electrically connected to the first and second electrodes formed on the first and second surfaces of the battery.

For example, first and second electrodes electrically connected to the first and second electrode tabs are formed on first and second surfaces of the battery, respectively, the second electrode is formed from a can extending to an edge position of the first surface to surround an opening of an open upper end while forming the entire second surface, and the first electrode is formed from a cap assembly assembled to an opening of an open upper end of the can.

For example, the arc shape of the first and second coupling parts is formed as a part of a concentric circle centered on the center position of the first and second surfaces and parallel to the outer circumference formed by the contours of the first and second surfaces.

For example, the first and second coupling parts extend to different lengths along an arc shape formed by the first and second coupling parts.

For example, along the arc shape of the first and second coupling parts, the second coupling part extends longer than the first coupling part.

For example, the shortest distance between one end position and the other end position of the arc shape formed by the second coupling part is formed at least three times the width of the second connection piece protruding to the outer position of the second surface among the second electrode tabs.

For example, first and second electrodes electrically connected to the first and second electrode tabs are formed on first and second surfaces of the battery, respectively, the second electrode is formed from a can extending to an edge position of the first surface to surround an opening of an open upper end while forming the entire second surface, and the first electrode is formed from a cap assembly assembled to the opening of the open upper end of the can.

For example, i) the positions equally dividing the length of the arc shape along the length of the arc shape formed by the first and second coupling parts, and ii) the positions of the first and second connection pieces protruding to external positions of the first and second surfaces among the first and second electrode tabs are aligned with respect to each other along the extension direction of the first and second electrode tabs.

### BRIEF DESCRIPTION OF THE DRAWINGS

Embodiments will be more clearly understood from the following detailed description taken in conjunction with the accompanying drawings in which:
FIG. 1 is a perspective view of a battery according to one or more embodiments;
FIG. 2 is an exploded perspective view of the battery shown in FIG. 1 in accordance with one or more embodiments;
FIG. 3 is a view showing structures of a first electrode tab and a first coupling part formed on the first surface of the battery shown in FIG. 1 in accordance with one or more embodiments;
FIG. 4 is a view showing structures of a second electrode tab and a second coupling part formed on the second surface of the battery shown in FIG. 1 in accordance with one or more embodiments;
FIG. 5 is an exploded perspective view of a core cell shown in FIG. 1 in accordance with one or more embodiments;
FIG. 6 is a cross-sectional view of a can as shown in FIG. 5 in accordance with one or more embodiments; and
FIG. 7 is a cross-sectional view of a portion of the can as shown by enlarging portion A of FIG. 6 in accordance with one or more embodiments.

### DETAILED DESCRIPTION OF THE EMBODIMENTS

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, a battery according to a preferred embodiment will be described with reference to the accompanying drawings.

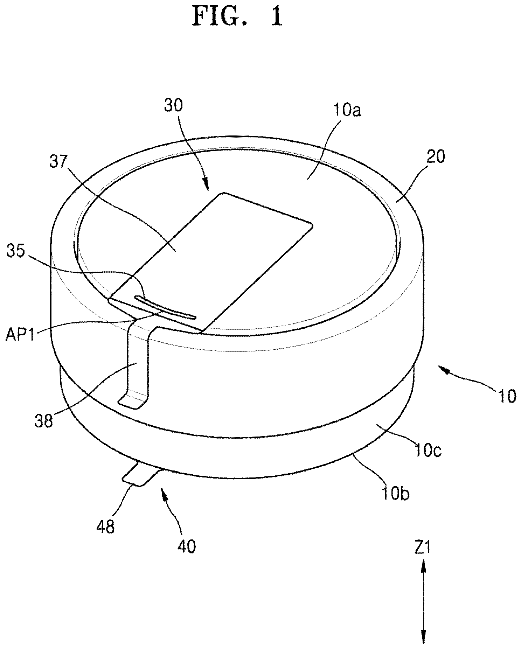

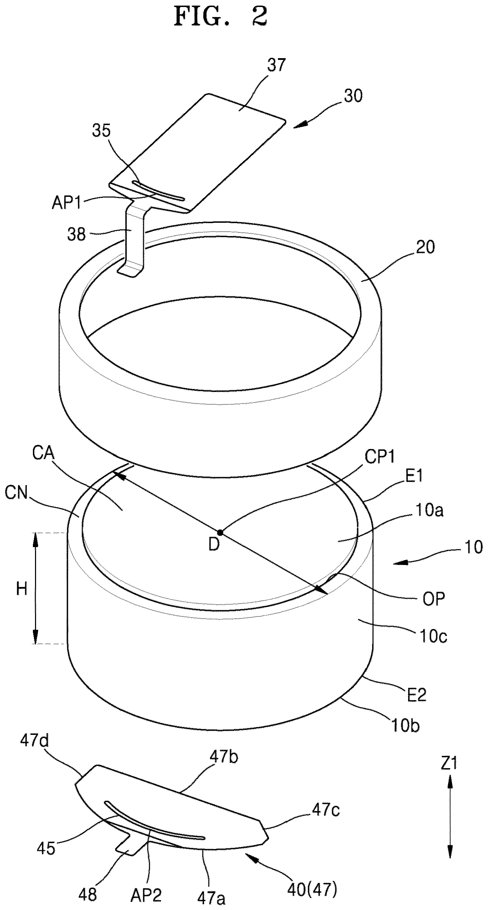

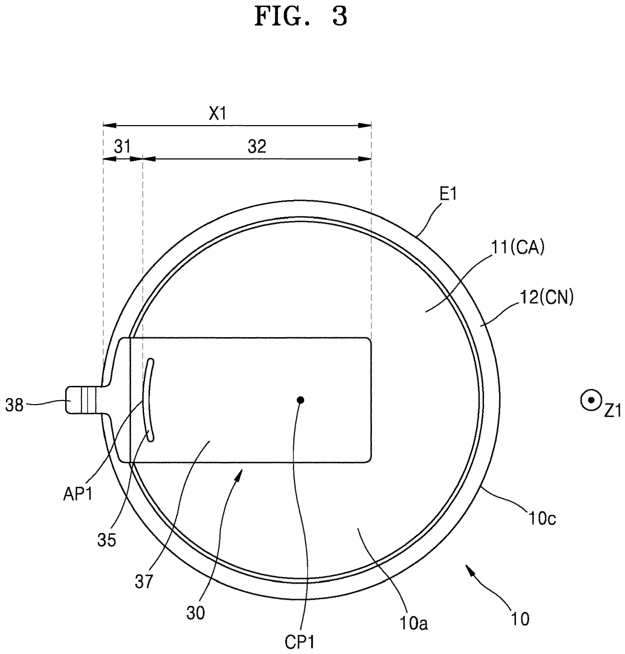

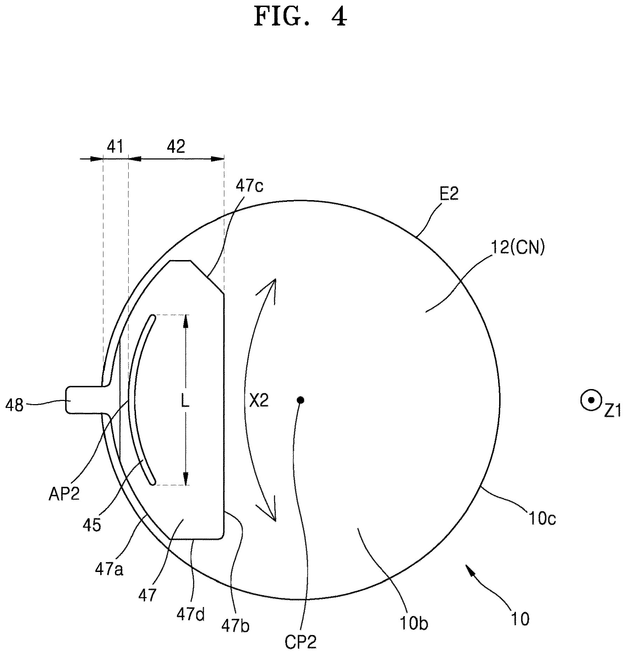

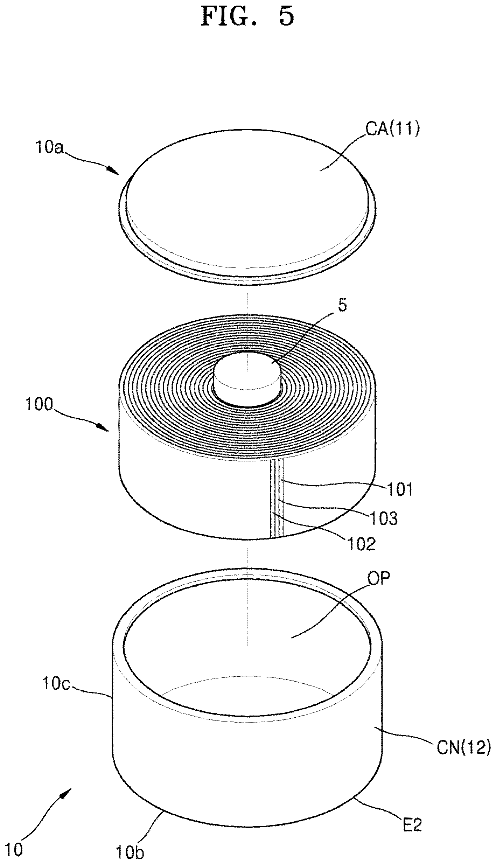

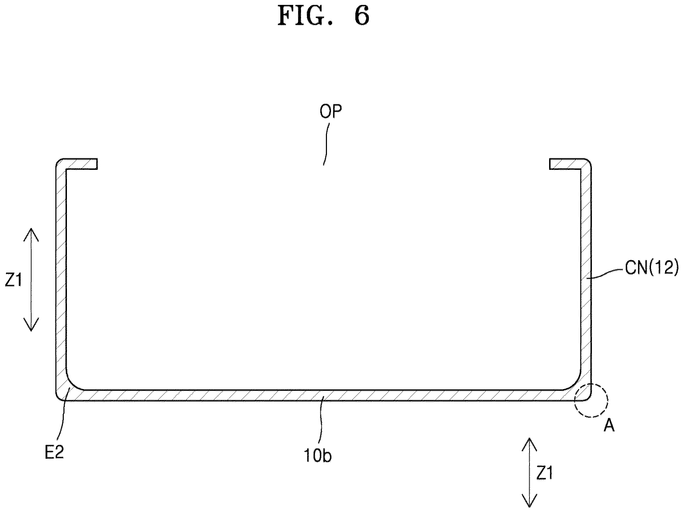

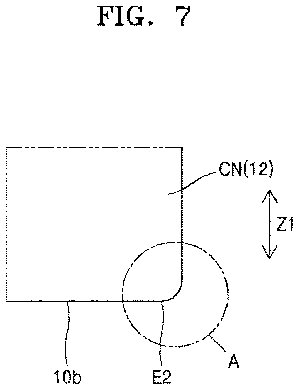

FIG. 1 is a perspective view of a battery according to an embodiment. FIG. 2 is an exploded perspective view of the battery shown in FIG. 1. FIG. 3 is a view showing structures of a first electrode tab and a first coupling part formed on the first surface of the battery shown in FIG. 1. FIG. 4 is a view showing structures of a second electrode tab and a second coupling part formed on the second surface of the battery shown in FIG. 1. FIG. 5 is an exploded perspective view of a core cell shown in FIG. 1. FIG. 6 is a cross-sectional view of a can shown in FIG. 5. FIG. 7 is a cross-sectional view of a portion of a can shown by enlarging portion A of FIG. 6.

Referring to the drawings, a battery according to an embodiment may include a core cell 10 including first and second surfaces 10a and 10b formed opposite to each other along a first axis Z1, first and second electrode tabs 30 and 40 respectively disposed on the first and second surfaces 10a and 10b of the core cell 10, and first and second coupling parts 35 and 45 formed in an arc shape and mediating the coupling between the first and second electrode tabs 30 and 40 and the first and second surfaces 10a and 10b of the core cell 10, respectively.

In some embodiments, the core cell 10 may include first and second surfaces 10a and 10b formed opposite to each other along the first axis Z1, and a side surface 10c connecting the first and second surfaces 10a and 10b to each other. For example, the core cell 10 according to an embodiment may include first and second surfaces 10a and 10b, and a side surface 10c forming a cylindrical surface or a circumferential surface so as to connect the first and second surfaces 10a and 10b to each other. In some embodiments, the first and second surfaces 10a and 10b may be formed in a circular shape. For example, the core cell 10 according to an embodiment may be formed in a slimmer shape with a height along the first direction Z1 that is relatively smaller than other dimensions (e.g., the diameter D of the first surface 10a). In some embodiments, the core cell 10 according to an embodiment may be formed in a slimmed-down cylindrical shape with a low height H smaller than the diameter D of the first surface 10a. For example, with respect to the aspect ratio of the core cell 10, the aspect ratio of the height H to the diameter D of the first surface 10a may be formed in a ratio of about 5.4:12 to about 5.4:14. In some embodiments, if the aspect ratio is smaller than the lowest value of 5.4:12, the height of the cell mounting space of the set device using the core cell 10 as a power source needs to be higher by that much, and accordingly, as a result, this acts as a limiting factor that cannot lower the height of the set device, and conversely, if the aspect ratio is greater than the highest value of 5.4:14, the core cell 10 excessively increases the aspect ratio of the electrode assembly 100 accommodated therein, so that as the aspect ratio of the electrode assembly 100 increases, energy efficiency relative to the same volume may decrease or excessive manufacturing costs may be wasted in forming the electrode assembly 100 having a high aspect ratio. Accordingly, in some embodiments, the aspect ratio of the core cell 10, that is, the aspect ratio of the diameter D of the first surface 10a to the height H, may be in the range of about 5.4:12 to about 5.4:14.

First and second electrodes 11 and 12 having opposite polarities may be formed on the first and second surfaces 10a and 10b of the core cell 10, respectively. In some embodiments, the first electrode 11 may be formed over most of the area including the center position CP1 of the first surface 10a, and the second electrode 12 may extend from the side surface 10c to an edge position E1 surrounding the center position CP1 of the first surface 10a while being formed over the side surface 10c from the entire second surface 10b. In some embodiments, center position CP1 and CP2 of first surface 10a or second surface 10b may refer to a center position of the first surface 10a or second surface 10b or a position including the centrifugal position of the circularly formed first surface 10a or second surface 10b, and the edge positions E1 and E2 of the first surface 10a or the second surface 10b are positions outside the center positions CP1 and CP2 of the first surface 10a or second surface 10b or the centrifugal position of the circularly formed first surface 10a or second surface 10b, and rather than the center position CP1 and CP2 of the first surface 10a or second surface 10b, may correspond to the outer peripheries of the first and second surfaces 10a and 10b that come into contact with the side surface 10c connecting the first and second surfaces 10a and 10b to each other.

In some embodiments, the second electrode 12 of the core cell 10 may be formed of a can CN that covers the entire second surface 10b of the core cell 10 and extends from the second surface 10b to the side surface 10c toward the first surface 10a, and a second electrode 12 may be formed on the first surface 10a of the core cell 10 while being exposed on the first surface 10a of the core cell 10 in a narrow width approaching the thickness of the can CN or the thickness of the can CN, and the second electrode 12 may be formed at the edge position E1 of the first surface 10a to surround the first electrode 11 formed at the center position CP1 of the first surface 10a. In some embodiments, the first electrode 11 may be formed from a cap assembly CA assembled along the inner circumference of the can CN to cover the opening OP of the open upper end of the can CN. Like this, the first and second electrodes 11 and 12 may be formed from a cap assembly CA welded along the inner circumference of the can CN to cover the different members assembled toward each other, that is, the can CN and the opening OP of the open upper end of the can CN, and even if the first and second electrodes 11 and 12 are formed together on the first surface 10a of the core cell 10, because the can CN and the cap assembly CA may be assembled to each other with an insulating gasket (not shown) therebetween, the first and second electrodes 11 and 12 having opposite polarities of the core cell 10 may not be short-circuited to each other, and for example, in some embodiments, the cap assembly CA forming the first electrode 11 and the can CN forming the second electrode 12 may be assembled to each other with an insulating gasket (not shown) therebetween an insulating gap that may prevent electrical contact from each other.

As such, in some embodiments, first and second electrodes 11 and 12 electrically connected to the first and second electrode tabs 30 and 40 may be formed on the first and second surfaces 10a and 10b of the core cell 10, respectively, and at this time, the second electrode 12 may be formed from a can CN extending to the edge position E1 of the first surface 10a to include the opening OP of the upper end opened while forming the second surface 10b as a whole, and the first electrode 11 may be formed from a cap assembly CA assembled to an opening OP of an open upper end of the can CN.

In some embodiments, the can CN and cap assembly CA may be assembled to each other along a first axis Z1, and an insulating bond to each other may be formed through an insulating gasket (not shown), and the electrode assembly 100 may be disposed between the can CN and the cap assembly CA.

Referring to FIG. 5, the electrode assembly 100 may include first and second electrode plates 101 and 102 connected to the first and second electrodes 11 and 12, respectively, and a separator 103 disposed between the first and second electrode plates 101 and 102 to provide electrical insulation from each other. In some embodiments, a laminate including the first and second electrode plates 101 and 102 and a separator 103 disposed between the first and second electrode plates 101 and 102 may be formed in a roll type in which the laminate is continuously wound along the circumference of the center pin 5 from one end of the laminate overlapping the center pin 5 toward the other end with the center pin 5 as the center of winding. However, in various embodiments, the laminate may be formed in a stack type in which the first and second electrode plates 101 and 102 and the separator 103 disposed between the first and second electrode plates 101 and 102 are alternately stacked.

In some embodiments, the electrode assembly 100 may include a center pin 5 disposed at a center position or a position close to the center position of the electrode assembly 100 while forming the winding center of the laminate including the first and second electrode plates 101 and 102 and the separator 103 disposed between the first and second electrode plates 101 and 102, and the center pin 5 of the electrode assembly 100 may be welded from the cap assembly CA disposed on the electrode assembly 100. In some embodiments, along the welding direction from the cap assembly CA forming the first surface 10a or the first electrode 11 of the core cell 10 to the center pin 5, it is possible to be welded toward the center pin 5 through the cap assembly CA, and through welding between the cap assembly CA and the center pin 5 facing each other, the electrode assembly 100 including the center pin 5 may be fixed in position inside the core cell 10 packed with the cap assembly CA and the can CN. For example, in some embodiments, the overall structure of the core cell 10 may be formed rotationally symmetrically with the center pin 5 disposed at the center position of the electrode assembly 100 or the electrode assembly 100, and accordingly, a coupling position with the center pin 5 may be formed at the center position of the cap assembly CA welded to the center pin 5 or the center position CP1 of the first surface 10a formed by the cap assembly CA. In various embodiments, the center pin 5 may be coupled to any position within the accommodation space formed by the cap assembly CA and the can CN without directly welding the cap assembly CA, and in addition to welding, by applying a preset pressure to the center position CP1 of the first surface 10a formed by the cap assembly CA while being directly or indirectly coupled to the cap assembly CA through a material (not shown) having both insulating and adhesive properties, this an affect the flatness of the center position CP1 of the first surface 10a, and in various embodiments, the center position CP1 of the first surface 10a along the first axis Z1 may be formed at a position corresponding to the center pin 5, and depending on a preset pressure transmitted through direct or indirect coupling with the center pin 5, flatness may be relatively low compared to other portions of the first surface 10a.

In some embodiments, a center position CP1 of the first surface 10a may form a concave lead-in shape toward the center pin 5 while forming a coupling position with the center pin 5. For example, a first coupling part 35 mediating coupling between the first surface 10a of the core cell 10 and the first electrode tab 30 is formed on the first surface 10a, and in some embodiments, the first coupling part 35 may be formed at an edge of the cap assembly CA having relatively good flatness or at a close-edge of the first surface 10a formed by the cap assembly CA rather than a center position CP1 in which a concave inlet shape is formed according to the position of engagement with the center pin 5 on the cap assembly CA forming the first surface 10a.

In some embodiments, the edge position of the cap assembly CA may refer to the close-edge position of the first surface 10a adjacent to the edge position E1 of the first surface 10a rather than the center position CP1 of the first surface 10a formed by the cap assembly CA,, and for example, refers to the edge position of the can CN exposed as the edge position E1 of the first surface 10a or the edge position of the cap assembly CA adjacent to the second electrode 12 formed by the can CN.

The first electrode tab 30 may extend along the radial direction of the first surface 10a from the center position CP1 (e.g., centrifugal position) of the first surface 10a in the circular outline formed by the first surface 10a, and through this specification, the extension direction or the longitudinal direction of the first electrode tab 30 may refer to a radial direction extending from a center position of the first surface 10a where the first electrode tab 30 is disposed or a centrifugal position along the circular contour of the first surface 10a. As described below, in some embodiments, the extending direction of the first electrode tab 30 may refer to a direction in which the first connection piece 38 protrudes from the main body 37 of the first electrode tab 30.

The first electrode tab 30 may include, along the extension direction of the first electrode tab 30, a main body 37 of the first electrode tab 30 on which the first coupling part 35 is formed and a first connection piece 38 extending from the main body 37 of the first electrode tab 30 to an outer position of the first surface 10a. In some embodiments, the main body 37 of the first electrode tab 30 may occupy most of the length of the first electrode tab 30 along the extension direction of the first electrode tab 30, and formed with a relatively wide width, it is possible to provide low resistance to charging and discharging power input and output from the first electrode 11. For example, the main body 37 of the first electrode tab 30 may be formed to have a wider width than the first connection piece 38 of the first electrode tab 30. In some embodiments, the width of the first electrode tab 30, the width of the main body 37 of the first electrode tab 30 forming the first electrode tab 30, or the width of the first connection piece 38 may refer to a dimension measured along a direction perpendicular to the extension direction of the first electrode tab 30 or along a direction perpendicular to the protrusion direction in which the first connection piece 38 protrudes.

In some embodiments, the main body 37 of the first electrode tab 30 forms a charge/discharge path of the core cell 10 via the first electrode 11 and may be formed with a relatively wide width, and considering the convenience of connection with an external device (not shown), for example, an external charger or an external load, or a circuit unit (not shown) that mediates electrical connection with these external devices (not shown), in terms of the configuration extending to the outside of the core cell 10, the first connection piece 38 of the first electrode tab 30 may have a relatively smaller width than the main body 37 of the first electrode tab 30 for the purpose of reducing physical and electrical interference from the external environment of the core cell 10. For example, in some embodiments, the relative connection (external device or circuit part) connected to the first connection piece 38 formed in a relatively thin width may maintain a relatively compact size while forming a connection with the first connection piece 38 having a relatively thin thickness.

The main body 37 of the first electrode tab 30 may include first and second portions 31 and 32 formed on opposite sides of each other along the extension direction of the first electrode tab 30 or along the extension direction of the first connection piece 38 based on the first coupling part 35 mediating the coupling with the first surface 10a of the core cell 10, and the first portion 31 may correspond to a portion where the first connection piece 38 protrudes, and the second portion 32 may correspond to a portion opposite to the first connection piece 38. In some embodiments, among the main body 37 of the first electrode tab 30, the second portion 32 disposed closer to the center position CP1 of the first surface 10a may extend longer than the first portion 31 disposed closer to the edge position of the first surface 10a, and for example, the length of the second portion 32 along the extension direction of the first electrode tab 30 may be longer than that of the first portion 31.

In some embodiments, the main body 37 of the first electrode tab 30 may have a second portion 32 relatively longer than the first portion 31, and for example, the first portion 31 of the main body 37 of the first electrode tab 30 forms an electrical connection with the first electrode 11, and the polarity of the first electrode 11 is exposed to the outside through the first connection piece 38, and it may be understood that a charge/discharge path of the first electrode tab 30 is formed from the first coupling part 35 substantially forming a connection with the first electrode 11 among the first electrode tabs 30. In some embodiments, the second portion 32 of the first electrode tab 30 is formed at a position opposite to the first connection piece 38 around the first coupling part 35, and a charge/discharge path of the first electrode tab 30 extending from the first coupling part 35 substantially forming a connection with the first electrode 11 to the first connection piece 38 may not be formed, but may substantially contribute to the flatness of the first electrode tab 30 while extending relatively longer than the first portion 31 forming the charge/discharge path of the first electrode tab 30, and an additional conducting area between the first electrode tab 30 and the first electrode 11 may be formed. For example, in some embodiments, the center position CP1 of the first surface 10a may form a concave retracting shape toward the center pin 5 through the position of engagement with the center pin 5, and accordingly, the overall flatness of the first surface 10a may be lowered. At this time, the second portion 32 of the first electrode tab 30 may improve the flatness of the first electrode tab 30 while extending across a substantial portion of the first surface 10a including the center position CP1 of the first surface 10a. For example, the first electrode tab 30 may be formed with an average flatness while extending across the meandering first surface 10a having a relatively concave-convex shape, such as the center position CP1 of the first surface 10a, and for example, along the local distortion or local inclination of the position where the first coupling part 35 mediating the coupling between the first electrode tab 30 and the first surface 10a is formed, other configurations in which the first electrode tab 30 forms the core cell 10 while the first electrode tab 30 is inclined toward one side, for example, the first connection piece 38 that causes a short circuit with the second electrode 12 surrounding the first electrode 11 or is drawn out of the core cell 10, may prevent inclining toward one side. In addition, the second portion 32 extends across a significant portion of the first electrode 11 formed on the first surface 10a or the first surface 10a including a locally distorted or inclined position, and in addition to the first coupling part 35, a plurality of portions forming electrical contact with the first electrode 11 may be formed, and accordingly, it is possible to contribute to forming a relatively low-resistance charge/discharge path between the first electrode 11 and the first connection piece 38. In some embodiments, in the main body 37 of the first electrode tab 30, the second portion 32 substantially extends longer than the first portion 31 forming the charge/discharge path of the first electrode tab 30 from the first coupling part 35 forming the electrical connection with the first electrode 11 to the first connection piece 38, and thus the flatness of the first electrode tab 30 may be improved, and in addition, electrical contact may be formed over a plurality of portions with the first electrode 11 forming the first surface 10a while extending across the first surface 10a, and thus a relatively low resistance charge/discharge path may be formed between the first electrode 11 and the first electrode tab 30. Along the extension direction of the first electrode tab 30 throughout this specification, that the second portion 32 of the first electrode tab 30 extends relatively longer than the first portion 31 may refer to that, for example, the second portion 32 is formed relatively longer than the first portion 31, for example, while the first coupling part 35 forming the boundary between the first and second portions 31 and 32 is formed close to the edge of the first surface 10a, and for example, in some embodiments, may refer to that the second portion 32 extends relatively long over from the circular contour formed by the first surface 10a to the centrifugal or center position CP1 of the first surface 10a.

In some embodiments, through the second portion 32 extending relatively long along the first surface 10a among the first electrode tabs 30, the present disclosure does not follow the local distortion or inclination of the first coupling part 35 coupling the first electrode tab 30 on the first surface 10a, and the posture of the first electrode tab 30 may be controlled to follow the average flatness of the first surface 10a.

In some embodiments, similar to the first electrode tab 30, the second electrode tab 40 includes a main body 47 of the second electrode tab 40 and a second connection piece 48 protruding from the main body 47 of the second electrode tab 40, and a second coupling part 45 may be formed on the main body 47 of the second electrode tab 40. And, along the extending direction of the second electrode tab 40 or along the protruding direction in which the second connection piece 48 protrudes, the main body 47 of the second electrode tab 40 may include first and second portions 41 and 42 extending in different lengths based on the second coupling part 45 as a center. Here, in the main body 47 of the second electrode tab 40, the first and second portions 41 and 42 may correspond to a portion where the second connection piece 48 is formed and a portion opposite to the second connection piece 48. As described below, due to the existence of processing deformation between the center position CP2 of the second surface 10b and the edge position E2 of the second surface 10b, the difference in thickness or stiffness, and the like, similar to the first surface 10a, a locally concave-convex meandering shape may be included on the second surface 10b, and accordingly, similar to the case of the first electrode tab 30 described above, unlike the first portion 41 that forms a charge/discharge path from the second coupling part 45 to the second connection piece 48, even if an actual charge and discharge path is not formed, the second portion 42 of the second electrode tab 40 may contribute to the overall flatness of the second electrode tab 40, and for example, the average flatness on the second surface 10b may be formed while extending the concave convex meandering shape formed on the second surface 10b to a relatively long length, and for example, the present disclosure does not follow the local distortion or inclination according to the specific position on the second surface 10b where the second coupling part 45 is formed, and for example, the local distortion or inclination of the second coupling part 45 is not followed through the second portion 42 of the second electrode tab 40 extending relatively long, and the posture of the second electrode tab 40 may be controlled to follow the average flatness of the second surface 10b.

In some embodiments, the first and second electrode tabs 30 and 40 may include first and second portions 31, 32, 41, and 42 extending to both sides, respectively, based on the first and second coupling parts 35 and 45, and because the first and second portions 31, 32, 41, and 42 may flow in opposite vertical directions along the first axis Z1 with the first and second coupling parts 35 and 45 as support points, the deformation of the first portions 31 and 41 may be controlled through the second portions 32 and 42 extending in a relatively long length, and through the second portions 32 and 42 extending across the first and second surfaces 10a and 10b and reflecting the average flatness on the first and second surfaces 10a and 10b, inclination of the first portions 31 and 41 may be controlled.

In some embodiments, describing the position where the first coupling part 35 is formed, the first coupling part 35 may be formed at a close-edge position of the first surface 10a. In some embodiments, the close-edge position of the first surface 10a where the first coupling part 35 is formed is an inner position compared to the edge position E1 of the first surface 10a on which the can CN or the second electrode 12 formed by the can CN is formed on the first surface 10a on which the cap assembly CA is formed and may refer to a circular centrifugal position formed by the contour of the first surface 10a or a position outside the center position CP1 of the first surface 10a. Throughout this specification, using relative comparison of the positions of two different portions on the first surface 10a or on the first electrode 11 formed on the first surface 10a, the inside position and the outside position may be understood as a position relatively adjacent to the center position CP1 of the centrifugal or first surface 10a in the circular contour formed by the first surface 10a as an inside position, and a position located relatively far from the center position CP1 of the first surface 10a and adjacent to the edge position E1 of the first surface 10a may be understood as an outer position.

In some embodiments, the close-edge position of the first surface 10a where the first coupling part 35 is formed may refer to the inner position of the outer peripheral line forming the end of the cap assembly CA forming the first electrode 11 on the first surface 10a, and may refer to the inner position of the cap assembly CA excluding the outer peripheral line forming the end of the cap assembly CA and a close-edge position of the first surface 10a adjacent to the edge position E1 of the first surface 10a. For example, the first coupling part 35 mediates the electrical connection between the first electrode tab 30 and the first electrode 11, and may correspond to a welding portion where welding is performed between the first electrode tab 30 and the first electrode 11, and to achieve stable welding between the first electrode tab 30 and the first electrode 11, the first coupling part 35 may be formed at an edge of the first surface 10a or an edge of the cap assembly CA forming the first electrode 11 excluding the outer circumferential line formed by the end of the cap assembly CA forming the first electrode 11.

In some embodiments, the first and second coupling parts 35 and 45 may be formed at close-edges of the first and second surfaces 10a and 10b, and for example, may be formed at an inner position of the edge positions E1 and E2 of the first and second surfaces 10a and 10b excluding the edge positions E1 and E2. However, in some embodiments, even if the first and second coupling parts 35 and 45 are both inside the first and second edge positions E1 and E2, and are formed at the close-edge positions of the first and second surfaces 10a and 10b adjacent to the first and second edge positions E1 and E2, close-edge positions of the first and second surfaces 10a and 10b where the first and second coupling parts 35 and 45 are formed may correspond to different positions, and for example, the first and second coupling parts 35 and 45 may be formed at an inner position adjacent to the shaft and an outer position far from the shaft according to the distance from the axis passing through the center positions CP1 and CP2 of the first and second surfaces 10a and 10b, respectively. This will be described in more detail later.

On the first surface 10a, the first electrode 11 formed over most of the area including the center position CP1 of the first surface 10a and the first surface 10a surrounding the first electrode 11 The second electrode 12 formed at the edge position E1 may be disposed together, and accordingly, the first electrode tab 30 electrically connected to the first electrode 11 may be coupled onto the first electrode 11 while being adjacent to the edge position E1 of the first surface 10a where the second electrode 12 is formed through the first coupling part 35 formed at the close-edge position of the first surface 10a adjacent to the edge position E1 of the first surface 10a or at the edge position of the cap assembly CA forming the first electrode 11. In some embodiments, unlike the first electrode 11 on surface 10a, the second electrode 12 may be formed as a whole on the second surface 10b, and accordingly, the second electrode tab 40 connected to the second electrode 12 may be coupled onto the second electrode 12 through the second coupling part 45 formed in a different position from the first electrode tab 30.

For example, in some embodiments, the first and second coupling parts 35 and 45 coupling the first and second electrode tabs 30 and 40 onto the first and second electrodes 11 and 12, respectively, may correspond to different projection positions along the first axis Z1. In some embodiments, when the positions of the first and second coupling parts 35 and 45 are projected along the first axis Z1, the projection positions of the respective first and second coupling parts 35 and 45 may be deviated from each other rather than coincident with each other. In some embodiments, the first coupling part 35 may be formed at an close-edge position of the first surface 10a corresponding to an inner position or at the edge of the cap assembly CA forming the first electrode 11 than the edge position E1 of the first surface 10a where the second electrode 12 is formed on the first surface 10a, or, for stable welding work of the first electrode tab 30, may be formed at an edge position of the cap assembly CA while extending more inwardly than the outer circumferential surface of the cap assembly CA corresponding to the end of the cap assembly CA.

In some embodiments, the second coupling part 45 coupling the second electrode tab 40 onto the second electrode 12 may be formed outside the first coupling part 35. For example, in some embodiments, among the first and second coupling parts 35 and 45, the first coupling part 35 may be formed at an inner position closer to the axis position penetrating the center positions CP1 and CP2 of the first and second surfaces 10a and 10b, and the second coupling part 45 may be formed at an outer position closer to the circular outline or outer circumference formed by the first and second surfaces 10a and 10b while relatively far away from the axial position penetrating the center positions CP1 and CP2 of the first and second surfaces 10a and 10b. Throughout this specification, the first and second coupling parts 35 and 45 are formed on first and second surfaces 10a and 10b opposite to each other along the first axis Z1, respectively, while the first and second surfaces 10a and 10b are parallel to the first and second surfaces 10a and 10b along the first axis Z1 away from each other, when the first and second coupling parts 35 and 45 are projected onto a virtual plane formed at an intermediate position between the first and second surfaces 10a and 10b, the projection positions of the first and second coupling parts 35 and 45 may be formed at relatively inner and outer positions, respectively, rather than coincident with each other.

In some embodiments, the first and second coupling parts 35 and 45 may be formed adjacent to the outer circumferences of the first and second surfaces 10a and 10b out of the center positions CP1 and CP2 of the first and second surfaces 10a and 10b or the centrifugal positions of the first and second surfaces 10a and 10b on the first and second surfaces 10a and 10b, respectively, and may be formed in an arc shape parallel to the outer circumferences of the first and second surfaces 10a and 10b. In some embodiments, the first and second coupling parts 35 and 45 are formed adjacent to the outer circumferences of the first and second surfaces 10a and 10b and may refer to the first and second coupling parts 35 and 45 being formed relatively adjacent to the outer circumferences of the first and second surfaces 10a and 10b rather than the center positions CP1 and CP2 of the first and second surfaces 10a and 10b. In some embodiments, the first and second coupling parts 35 and 45 forming the position fixing of the first and second electrode tabs 30 and 40 have relatively excellent rigidity compared to the center position CP1 and CP2 of the first and second surfaces 10a and 10b, which are relatively unfavorable on the flatness side surface, considering the flatness of first and second surfaces 10a and 10b, and forming at the close-edge position adjacent to the outer circumference of the first and second surfaces 10a and 10b, which is relatively advantageous on the flatness side surface, so that welding stability between the first and second electrode tabs 30 and 40 and the first and second electrodes 11 and 12 may be improved. For example, in some embodiments, through the first and second coupling parts 35 and 45 formed at the close-edge positions of the first and second surfaces 10a and 10b, which have relatively high rigidity, a uniform welding depth may be maintained along the first and second coupling parts 35 and 45 formed in an arc shape substantially parallel to the outer circumferences of the first and second surfaces 10a and 10b. Unlike the present disclosure, when welding is performed in a relatively low flatness area including concave and convex meandering portions along the heat input direction, separation may proceed along the first and second coupling parts 35 and 45 from a portion where the welding strength is relatively low while the welding depth or welding heat input is not maintained uniformly, and as a result, the first and second electrode tabs 30 and 40 via the first and second coupling parts 35 and 45 may be peeled off from the first and second surfaces 10a and 10b.

In some embodiments, while the center position CP1 of the first surface 10a is relatively concavely formed toward the center pin 5 according to the welding with the center pin 5 facing the center position CP1 of the first surface 10a, the flatness of the center position CP1 of the first surface 10a may drop, and the center position CP2 of the second surface 10b is less rigid than the edge position E2 of the second surface 10b hardened through processing deformation or formed with a relatively thick thickness, and in addition, while absorbing deformation due to restoration after machining of the edge position E2 of the second surface 10b, the flatness of the center position CP2 of the second surface 10b may be lower than that of the edge position E2 of the second surface 10b.

Although different explanations are given for the decrease in flatness at center positions CP1 and CP2 of the first and second surfaces 10a and 10b throughout the present specification, in some embodiments, the decrease in flatness at the center position CP1 and CP2 of the first and second surfaces 10a and 10b may be understood as a cause or phenomenon similar to each other, and for example, compared to edge positions E1 and E2 formed with work hardening or relatively thick thickness, the phenomenon that the flatness may be reduced at the center position CP1 and CP2, where rigidity is reduced and deformation such as restoration after machining of the edge position E1 and E2 may be forced, may be equally caused in the first and second surfaces 10a and 10b. For example, in some embodiments, the can CN forming the second electrode 12 may be formed into a container shape including an open upper end opening OP through a forming process such as deep drawing, and the center position CP2 of the second surface 10b to which the tip of the processing tool is applied along the forming direction of deep drawing along the first axis Z1 may be formed with the thinnest thickness according to the metal flow, and the edge position E2 of the second surface 10b to which the edge of the machining tool is applied may form a relatively thick thickness according to the shape of the machining tool. For example, a machining tool applied to deep drawing may have a shape that changes gently rather than a steeply angled shape to promote metal flow at an edge position unfavorable to metal flow (corresponding to edge position E2 of second surface 10b), and depending on the shape of this machining tool, the edge position E2 of the second surface 10b may be formed relatively thicker than the center position CP2 of the second surface 10b, and however, because the most metal flow is forced at the edge position corresponding to the edge position E2 of the second surface 10b, it is possible to have a relatively light property according to work hardening, and the edge position E2 of the second surface 10b, which is formed with a relatively thick thickness and has a relatively light nature, may not be suitable for the position of the second coupling part 45, and for example, unlike in the present disclosure, with the second coupling part 45 formed at the edge position E2 of the second surface 10b, sufficient welding strength between the second electrode 12 and the second electrode tab 40 may not be formed, or welding stability may be relatively low. In some embodiments, in the edge position E2 of the second surface 10b, a deep welding depth may be required to penetrate a relatively thick thickness, and in addition, a defect such as a crack may be caused at a welding portion according to welding heat applied to the edge position E2 of the second surface 10b having a relatively light property. In addition, because deformation is likely to occur due to the relatively thin thickness at the center position CP2 of the second surface 10b, and in addition, it is difficult to maintain flatness while being forced to absorb deformation such as restoration after machining at the edge position E2 of the second surface 10b surrounding the center position CP2 of the second surface 10b, in some embodiments, the location of the second coupling part 45 may not be appropriate. In some embodiments, as shown in FIG. 7, in deep drawing as a forming process of the can CN forming the second surface 10b, a round may be formed at the edge position E2 of the second surface 10b according to the shape of the processing tool, and because the round formed at the edge position E2 of the second surface 10b reduces the flatness of the position and forms a gap with the second electrode tab 40, except for the edge position E2 of the second surface 10b, the second coupling part 45 mediating the coupling between the second electrode tab 40 and the second surface 10b may be formed at a close-edge position of the second surface 10b, which is a position inside the edge position E2 of the second surface 10b.

In conclusion, in some embodiments, the second coupling part 45 may be formed at a position excluding the center position CP2 and the edge position E2 of the second surface 10b, and excluding the center position CP2 and the edge position E2, may be formed at the close-edge position of the second surface 10b adjacent to the edge position E2. Through this specification, the edge positions E1 and E2 of first and second surfaces 10a and 10b may refer to a position on the second surface 10b that meets the outer circumference along the contour formed by the first and second surfaces 10a and 10b, and In some embodiments, may refer to the outer circumference of the first and second surfaces 10a and 10b that come into contact with the side surface 10c connecting the first and second surfaces 10a and 10b to each other. For example, in some embodiments, the first coupling part 35 may be formed at a close- edge of the first surface 10a on the first surface 10a, and may be formed at a position inside the edge position E1 other than the edge position E1 of the first surface 10a where the second electrode 12 is formed. In some embodiments, the close-edge position of the first surface 10a where the first coupling part 35 is formed is may refer to a position inside the edge position E1 on the first surface 10a that comes into contact with the outer circumference formed by the contour of the first surface 10a.

In some embodiments, on the first surface 10a, the first electrode 11 may be formed over most of the area including the center position CP1 of the first surface 10a, and a first coupling part 35 for electrically connecting the first electrode 11 and the first electrode tab 30 may be formed at the edge of the first electrode 11 or the edge of the cap assembly CA forming the first electrode 11. In some embodiments, the first coupling part 35 may be formed in an open arc shape. For example, in some embodiments, the first coupling part 35 may be formed in an arc shape concavely drawn toward the center position CP1 of the first surface 10a on which the first electrode 11 is formed. In some embodiments, the first coupling part 35 may be formed in an arc shape concave toward the center position CP1 of the first surface 10a and convex toward the outside of the first surface 10a. In various embodiments, the first coupling part 35 propagates an external impact transmitted through the first connection piece 38 formed outside the first surface 10a according to both sides of the arc shape centered on the arc-shaped curved position AP1 where the first connection piece 38 is formed, so that it is possible to block the concentration of stress at any portion along the first coupling part 35, and according to the stress concentration caused at any one portion on the first coupling part 35, a peeling off phenomenon in which the first coupling part 35 is lifted from the first surface 10a due to destruction of the first coupling part 35 or stress concentration may be prevented. For example, in some embodiments, the first connection piece 38 is a portion extending to an outer position of the first surface 10a among the first electrode tabs 30, and may correspond to an action position of an external impact applied from the outside, and an external impact transmitted through the first connection piece 38 may be transmitted to the first coupling part 35 that exerts a position fixing force of the first electrode tab 30. In some embodiments, according to the arc shape of the first coupling part 35 to which the external impact is transmitted through the relative positional relationship between the first connection piece 38 corresponding to the action position of the external impact and the first coupling part 35 to which the external impact is transmitted, In some embodiments through a symmetrical positional relationship, or the curved position AP1 aligned with the first connection piece 38 and the curved position AP1 centered on both sides of the first coupling part 35 may induce transmission of evenly propagated stress, compared to the length of the first coupling part 35, impact resistance against external impact may be relatively strengthened. In some embodiments, aligning the relative position between the first connection piece 38 and the first coupling part 35 may refer to, for example, that the center position (corresponding to the curved position AP1) of the first connection piece 38 and the first coupling part 35 are aligned with each other along the extension direction of the first electrode tab 30 or along the protrusion direction of the first connection piece 38, and may refer to position that bisects the length of the first coupling part 35 along the length of the first coupling part 35 formed in the arc shape of the center position of the first coupling part 35.

In some embodiments, the first coupling part 35 may be formed in an arc shape corresponding to a part of a concentric circle centered on the center position CP1 of the first surface 10a around the circular outline or circumference of the first surface 10a, and may be formed in an arc shape parallel to the circular outline or circumference of the first surface 10a centered on the center position CP1 of the same first surface 10a. As such, in some embodiments, because the first coupling part 35 is formed in an arc shape substantially concentric with the contour of the first surface 10a or the outer circumference of the first surface 10a, each portion along the arc shape forming the first coupling part 35 may maintain the same distance from the center position CP1 of the first surface 10a and from the circular contour of the first surface 10a, and each part along the arc shape of each first coupling part 35 may maintain equal coupling strength, and in a battery structure that may be formed rotationally symmetrically along the circumference of an axis passing through center positionsCP1 and CP2 of first and second surfaces 10a and 10b, substantially the same coupling strength may be expected along the first coupling part 35 formed at the same portion along the circumference of the shaft, and destruction of the first coupling part 35 or progression of destruction of the first coupling part 35 due to a decrease in local coupling strength may be prevented.

In some embodiments, similar to the first coupling part 35, the second coupling part 45 may be formed in an arc shape that is concave toward the center position CP2 of the second surface 10b and convex toward the outer position of the second surface 10b, and for example, the second coupling part 45 may be formed in the form of a concentric circle having the same centrifugal angle as the contour or outer circumference of the second surface 10b (corresponding to the center position CP2 of the second surface 10b), and may be formed as part of concentric circles. In this way, the first and second coupling parts 35 and 45 may set the center positions CP1 and CP2 of the first and second surfaces 10a and 10b as centrifugal, respectively, and may be formed in an arc shape concentric with the outer circumference of the first and second surfaces 10a and 10b, and accordingly, uniform coupling strength may be exhibited along the arc shape of the first and second coupling parts 35 and 45 formed along the same position in a rotationally symmetrical battery. For example, in some embodiments, if the first and second surfaces 10a and 10b are formed in substantially the same circular shape, arc shapes formed by the first and second coupling parts 35 and 45 formed on the first and second surfaces 10a and 10b may have substantially the same curvature.

Similar to the positional alignment between the first connection piece 38 and the first coupling part 35 described above, the center position (corresponding to the curved position AP2) of the second connection piece 48 and the second coupling part 45 may be positioned relative to each other along the extension direction of the second electrode tab 40 or along the protrusion direction of the second connection piece 48, and in this case, the center position of the second coupling part 45 may refer to a position at which the length of the second coupling part 45 is bisected along the length of the second coupling part 45 formed in an arc shape.

In some embodiments, the first and second coupling parts 35 and 45 may have different lengths along the arc shape formed by the first and second coupling parts 35 and 45, and for example, the length of the second coupling part 45 may be longer than that of the first coupling part 35. In some embodiments, the second coupling part 45 is formed on the can CN forming the second electrode 12, and except for the open upper end opening OP, because the can CN extends from the second surface 10b to the edge position E1 of the first surface 10a through the side surface 10c connecting the first and second surfaces 10a and 10b, the core cell 10 may be disposed with the can CN at a lower position, and for example, in that external harmful substances such as moisture may be effectively blocked from the support surface forming the support base of the battery, the can CN, which integrally connects the second surface 10b to the side surface 10c, is positioned at the lower position, and for example, by disposing the core cell 10 such that the second surface 10b formed of the can CN touches the support surface, external harmful substances may be effectively blocked, and In this way, with the first and second surfaces 10a and 10b as the upper and lower surfaces, respectively, as the core cell 10 is placed, to impart a higher bonding strength to the second electrode tab 40 extending from the second surface 10b, which has a relatively high possibility of physical interference from the external environment adjacent to the support surface, the length of the second coupling part 45 formed on the second surface 10b may be relatively longer than that of the first coupling part 35. For example, the first and second coupling parts 35 and 45 formed vertically along the first axis Z1 may have different lengths in consideration of the possibility of physical interference from the external environment. In some embodiments, the length of the second coupling part 45 forming an arc shape may be set to an appropriate length in relation to the width of the second connection piece 48 that accommodates external impact. For example, in some embodiments, the width of the second connection piece 48 may refer to a dimension measured along a direction crossing a protruding direction in which the second connection piece 48 protrudes, and as shown in FIG. 4, the length of the second coupling part 45 is expressed as the shortest distance L that connects one end position to the other end position along the arc shape forming the second coupling part 45 as the shortest, and in some embodiments, the shortest distance L expressing the length of the second coupling part 45 may be set to three times or more than the width of the second connection piece 48. In some embodiments, expressing the length of the second coupling part 45, by designing the shortest distance L between one end position and the other end position of the second coupling part 45 to be more than three times the width of the second connection piece 48, while the external impact received through the second connection piece 48 is propagated through the second coupling part 45 extending in an arc shape of the designed length, local stress concentration along the second coupling part 45 may be prevented.

In some embodiments, the first and second electrode tabs 30 and 40 may be formed in different shapes. For example, in some embodiments of the invention, the first electrode tab 30 may extend along a radial direction from the center position CP1 (e.g., centrifugal position) of the first surface 10a and extend across a significant portion of the first surface 10a, and when compared to the second surface 10b, through the first electrode tab 30 extending across the first surface 10a having a relatively low flatness according to welding with the center pin 5, it does not follow the local distortion or inclination of the first coupling part 35 coupling the first electrode tab 30 on the first surface 10a., the posture of the first electrode tab 30 may be controlled to follow the flatness of the average first surface 10a, and while following the local distortion or inclination of the first coupling part 35, as the first electrode tab 30 via the first coupling part 35 is inclined toward one side or forms an end of the first electrode tab 30 in particular, the first connection piece 38 mediating the connection with the external device may not be inclined toward either side. For this reason, the first electrode tab 30 may extend along the radial direction from the center position CP1 of the first surface 10a, and may be formed in a substantially rectangular shape extending long along the radial direction. For example, the first electrode tab 30 may be formed in a substantially rectangular shape including a pair of long sides extending side by side along the radial direction on a rotational coordinate system set on the first surface 10a and a pair of short sides connecting the pair of long sides to each other. In some embodiments, the first electrode tab 30 may be formed in a long side shape having a long axis X1 (see FIG. 3) in a radial direction from the center position CP1 of the first surface 10a. In some embodiments, that the first electrode tab 30 has the radial direction as the long axis X1 may refer to that the main body 37 of the first electrode tab 30, which occupies the main portion of the first electrode tab 30, having a long axis X1 in the radial direction. In some embodiments, in the main body 37 of the first electrode tab 30, the maximum span along the radial direction or the direction parallel to the radial direction from the center position CP1 of the first surface 10a may refer to being greater than the maximum span along the rotation direction centered on the circumference of the center position CP1 of the first surface 10a, and the maximum span may mean a length that extends the longest among lengths crossing the first electrode tab 30 along each direction.

The second electrode tab 40 may be formed in a shape elongated along a rotational direction centered on the center position CP2 rather than extending along the radial direction from the center position CP2 of the second surface 10b. In some embodiments, for the rotational coordinate system set on the first and second surfaces 10a and 10b, the shape of the first electrode tab 30 may be formed in a shape having a long axis X1 (see FIG. 3) along the radial direction, and the shape of the second electrode tab 40 may be formed to have a long axis X2 (see FIG. 4) along the rotation direction. In some embodiments, that the rotation direction of the second electrode tab 40 uses the long axis X2 (see FIG. 4) may refer to that the main body 47 of the second electrode tab 40, which occupies the main portion of the second electrode tab 40, rotates in the long axis X2, and In some embodiments, the main body 47 of the second electrode tab 40 may refer to that the maximum span along the rotational direction centered on the circumference of the center position CP2 of the second surface 10b is greater than the maximum span along the radial direction from the center position CP2 of the second surface 10b. Here, the maximum span may refer to a length that extends the longest among lengths crossing the second electrode tab 40 along each direction.

In some embodiments, rather than that the rotation direction of the second electrode tab 40 being the long axis X2 does not limitedly refer to the second electrode tab 40 including only the edge of a columnar shape extending along the rotation direction, considering the convenience of processing, that the rotation direction of the second electrode tab 40 is the long axis X2 may comprehensively refer to that the cylindrical edge and the edge extending in a straight line are included together.

As shown in FIG. 4, in the second electrode tab 40 or the main body 47 of the second electrode tab 40, the second connection piece 48 protrudes and may include a longest first edge 47a formed in an arc shape and a second edge 47b extending in a straight line from the opposite side of the first edge 47a, and by connecting the first and second edges 47a and 47b to each other and including the shortest third and fourth edges 47c and 47d formed in a straight line, and considering the overall shape of the second electrode tab 40 or the main body 47 of the second electrode tab 40, it may be understood as a form including a long axis X2 (see FIG. 4) along a rotational direction rather than a long axis X1 (see FIG. 3) along a radial direction like the first electrode tab 30.

In some embodiments, the first and second electrode tabs 30 and 40 may include first and second connection pieces 38 and 48 protruding from the first and second surfaces 10a and 10b corresponding to the upper and lower surfaces along the first axis Z1 to an external position outside the first and second surfaces 10a and 10b, respectively, and the first and second connection pieces 38 and 48 may protrude from the upper and lower surfaces of the core cell 10, respectively. At this time, according to the orientation of the core cell 10, the core cell 10 may be disposed with the first and second surfaces 10a and 10b as upper and lower surfaces, respectively, and for example, through the can CN integrally forming the second surface 10b and the side surface 10c, because the core cell 10 may effectively block the permeation of external harmful substances from the supporting surface on which it is supported, the core cell 10 may be disposed with the first and second surfaces 10a and 10b as upper and lower surfaces, respectively. At this time, the second electrode tab 40 extending from the second surface 10b corresponding to the lower surface of the core cell 10 may be more vulnerable to physical and electrical interference from the external environment, and for example, rather than the first electrode tab 30 disposed at a relatively high level from the external environment formed on the support surface on which the core cell 10 is disposed, the possibility of interference from the external environment of the second electrode tab 40 disposed at a relatively low level may be relatively high. In this way, according to the difference in level along the first axis Z1 from the support surface on which the core cell 10 is disposed, to more firmly protect the second electrode tab 40, which may be disposed in a structure that is more vulnerable to the external environment, the second electrode tab 40 may be formed in a shape having a long axis X2 along the rotation direction. For example, the second electrode tab 40 may exhibit support strength capable of effectively resisting an external moment along a rotational direction while extending in the direction of rotation centered on the center position CP2 of the second surface 10b as the long axis X2. For example, an external impact may act toward the second connection piece 48 forming the front end of the second electrode tab 40, and this external impact may act on the second electrode tab 40 as an external moment centered on the center position CP2 of the second surface 10b, and as a result, by twisting the second coupling part 45 fixing the second electrode tab 40, because the second coupling part 45 or the second electrode tab 40 coupled through the second coupling part 45 is peeled off, as forming the shape of the second electrode tab 40 or the shape of the main body 47 of the second electrode tab 40 occupying the main portion of the second electrode tab 40 has a long axis X2 following the rotation direction, even if the second coupling part 45 is excluded, effective resistance to an external moment may be provided through at least the frictional force between the second electrode tab 40 and the second surface 10b, for example, the frictional force based on the roughness on the second surface 10b.

Referring to FIG. 1, the first and second connection pieces 38 and 48 of the first and second electrode tabs 30 and 40 may extend adjacent to each other along the first axis Z1, and for example, the first connection piece 38 may extend toward the second connection piece 48 along the first axis Z1 while extending from the first surface 10a on which the main body 37 of the first electrode tab 30 is disposed to the side surface 10c connecting the first and second surfaces 10a and 10b to each other, and in the first connection piece 38 disposed on the side surface 10c, the first and second connection pieces 38 and 48 may include extending ends parallel to each other at positions adjacent to each other along the first axis Z1 while bending along the extension direction of the first electrode tab 30.

On the other hand, an insulating cap 20 may be covered on the first surface 10a, and the insulating cap 20 may provide electrical insulation of the second electrode 12 formed around the first electrode 11 while allowing electrical connection of the first electrode 11 exposed through the central opening. In some embodiments, electrical connection of the first electrode 11 may be made through the first electrode tab 30 disposed on the first surface 10a, and electrical connection of the second electrode 12 may be made through the second electrode tab 40 disposed on the second surface 10b, and at this time, in addition to the first electrode 11 forming an electrical connection through the first surface 10a, to allow the second electrode 12 to be not exposed through the first surface 10a, and the first electrode tab 30 disposed on the first surface 10a to be not short-circuited with the second electrode 12, as the insulating cap 20 is covered at the edge position E1 of the first surface 10a, the second electrode 12 formed at the edge position E1 of the first surface 10a may not be exposed through the first surface 10a.

Provided is a battery. The battery includes a core cell including first and second surfaces opposite each other along a first axis, first and second electrode tabs respectively disposed on the first and second surfaces of the core cell, and first and second coupling parts respectively fixing the first and second electrode tabs on the first and second surfaces, respectively, wherein the first and second coupling parts are respectively formed along a concave arc shape toward the center position of the first and second surfaces.

While forming a conductive connection to the electrode of the core cell and the electrode of the core cell, the position of the coupling part that intermediates the coupling between the electrode tabs forming the charge and discharge path of the core cell indicates the position as an appropriate position that is advantageous in the relatively flatness side surface and may improve weldability on the first and second surfaces where the first and second electrodes are formed. In addition, through the design of the shape of the coupling part designed in an arc shape extending to both sides centering on the curved position that may be exposed to external impact, by propagating an external impact along both sides of the curved position, the destruction of coupling parts may be prevented while preventing local stress concentration, and as a result, it is possible to increase the bonding strength between the core cell and the electrode tab. Thus, a battery may be provided, in which peeling off of an electrode tab lifted from a core cell due to an external impact may be prevented.

## Claims

1. A battery comprising:
a core cell (10) including first and second surfaces (10a, 10b) opposite each other along a first axis;
first and second electrode tabs (30, 40) respectively disposed on first and second surfaces (10a, 10b) of the core cell (10); and
first and second coupling parts (35, 45) respectively fixing the first and second electrode tabs (30, 40) on the first and second surfaces (10a, 10b), respectively,
wherein the first and second coupling parts (35,45) are respectively formed along a concave arc shape toward a center position of each of the first and second surfaces (10a, 10b).

2. The battery as claimed in claim 1, wherein the first and second coupling parts (35, 45) respectively conductively couple the first and second electrodes (11, 12) respectively formed on the first and second surfaces (10a, 10b) and the first and second electrode tabs (30, 40), respectively, to each other and/or wherein the first and second coupling parts (35, 45) are respectively formed at close-edge positions of the first and second surfaces (10a, 10b) that are inward from edge positions of the first and second surfaces (10a, 10b) and close to the edge positions of the first and second surfaces (10a, 10b), respectively, and/or
wherein the first coupling part (35) is formed at an inner position of an outer circumferential line forming an end of the cap assembly, and/or wherein the first and second coupling parts (35, 45) are formed at positions relatively adjacent to the edge positions of the first and second surfaces (10a, 10b) among the center positions of the first and second surfaces (10a, 10b) and the edge positions of the first and second surfaces (10a, 10b).

3. The battery as claimed in claim 2, wherein first and second electrodes (11, 12) respectively electrically connected to the first and second electrode tabs (30, 40) are formed on first and second surfaces (10a, 10b) of the battery, respectively,
wherein the second electrode (12) is formed from a can extending to an edge position of a first surface (10a) to surround an opening of an open upper end while forming the entire second surface (10b),
wherein the first electrode (11) is formed from a cap assembly assembled to an opening of an open upper end of the can,
wherein a second electrode (12) is formed at an edge position of the first surface (10a), and
wherein a thickness at the edge position of the second surface (10b) is greater than a thickness at the center position of the second surface (10b).

4. The battery as claimed in at least one of the preceding claims , wherein the edge position of the first and second surfaces (10a, 10b) corresponds to the outer circumference of the first and second surfaces (10a, 10b) that come into contact with the side surface (10c) connecting the first and second surfaces (10a, 10b) to each other and/or wherein close-edge positions of the first and second surfaces (10a, 10b) where the first and second coupling parts (35, 45) are formed are projected to different positions along a first axis.

5. The battery as claimed in claim 1, wherein the first coupling part (35) is formed at a position relatively adjacent to the center position of the first surface (10a), and
wherein the second coupling part (45) is formed at a position relatively far from the center position of the second surface (10b) and/or wherein the first and second coupling parts (35, 45) are formed at an inner position relatively adjacent to the axis and an outer position relatively far from the axis, respectively, according to a distance from an axis passing through the center position of the first and second surfaces (10a, 10b).

6. The battery as claimed in claim 5, wherein the first surface (10a) comprises a first electrode (11) formed over a region including a center position of the first surface (10a) and a second electrode (12) formed at an edge position of the first surface (10a), and
wherein the second surface (10b) comprises a second electrode (12) formed over the entire second surface (10b).

7. The battery as claimed in claim 1, wherein the first and second electrode tabs (30, 40) respectively comprise main bodies of the first and second electrode tabs (30, 40) formed on the first and second surfaces (10a, 10b), respectively, and first and second connection pieces (38, 48) protruding from the main body (37, 47) of the first and second electrode tabs (30, 40) to an outer position of the first and second surfaces (10a, 10b) and/or wherein, along the width direction intersecting the protruding direction of the first and second connection pieces (38, 48), each of the first and second connection pieces (38, 48) is formed to have a width less than a width of the main body (37, 47) of each of the first and second electrode tabs (30, 40).

8. The battery as claimed in claim 7, wherein, along the protrusion direction in which the first and second connection pieces (38, 48) protrude,
the main body (37, 47) of the first and second electrode tabs (30, 40) respectively include first and second portions (31, 32, 41, 42) formed on opposite sides of the first and second coupling parts (35, 45), respectively, and
wherein a second portion (32, 42) opposite to the first and second connection pieces (38, 48) extends more than the first portion (31, 41) from which the first and second connection pieces (38, 48) protrude.

9. The battery as claimed in claim 7, wherein the main body (37, 47) of the first electrode tab (30) has a radial direction as a long axis, so that the maximum span along the radial direction from the center position of the first surface (10a) is greater than the maximum span along the rotational direction around the center position of the first surface (10a), and
wherein the main body (37, 47) of the second electrode tab (40) has a major axis in the rotation direction, so that the maximum span along the rotational direction centered on the circumference of the center position of the second surface (10b) is greater than the maximum span along the radial direction from the center position of the second surface (10b), and/or , wherein the center position of the first surface (10a) corresponds to the position of a center pin forming a winding center of an electrode assembly (100) electrically connected to the first and second electrodes (11, 12) formed on the first and second surfaces (10a, 10b) of the battery.

10. The battery as claimed in at least one of the preceding claims, wherein first and second electrodes (11, 12) respectively electrically connected to the first and second electrode tabs (30, 40) are formed on first and second surfaces (10a, 10b) of the battery, respectively,
wherein the second electrode (12) is formed from a can extending to an edge position of the first surface (10a) to surround an opening of an open upper end while forming the entire second surface (10b), and
wherein the first electrode (11) is formed from a cap assembly assembled to an opening of an open upper end of the can.

11. The battery as claimed in claim 1, wherein the arc shape of the first and second coupling parts (35, 45) is formed as a part of a concentric circle centered on the center position of the first and second surfaces (10a, 10b) and parallel to the outer circumference formed by the contours of the first and second surfaces (10a, 10b), and/or ,wherein the first and second coupling parts (35, 45) respectively extend to different lengths along an arc shape formed by the first and second coupling parts (35, 45), and/or wherein, along the arc shape of the first and second coupling parts (35, 45), the second coupling part (45) extends more than the first coupling part (35).

12. The battery as claimed in claim 11, wherein the shortest distance between one end position and the other end position of the arc shape formed by the second coupling part (45) is formed to be at least three times the width of the second connection piece (48) protruding to the outer position of the second surface (10b) among the second electrode tabs (40).

13. The battery as claimed in claim 11, wherein first and second electrodes (11, 12) respectively electrically connected to the first and second electrode tabs (30, 40) are formed on first and second surfaces (10a, 10b) of the battery, respectively,
wherein the second electrode (12) is formed from a can extending to an edge position of the first surface (10a) to surround an opening of an open upper end while forming the entire second surface (10b), and
wherein the first electrode (11) is formed from a cap assembly assembled to the opening of the open upper end of the can.

14. The battery as claimed in claim 1, wherein i) the positions equally dividing the length of the arc shape along the length of the arc shape formed by the first and second coupling parts (35, 45), and
ii) the positions of first and second connection pieces (38, 48) protruding to external positions of the first and second surfaces (10a, 10b) among the first and second electrode tabs (30, 40) are aligned with respect to each other along the extension direction of the first and second electrode tabs (30, 40).
